# EUROPEAN PATENT APPLICATION

(11) **EP 4 621 254 A1**
(43) Date of publication of application: **24.09.2025**
(21) Application number: 23911289.9
(22) Date of filing: 13.09.2023
(51) Int. Cl.: F16D 1/06, B23Q 1/52, B25J 15/08, F16H 3/02, F16H 25/24, H02K 7/00

(54) **DRIVING DEVICE ATTACHMENT**

(30) Priority: 27.12.2022 JP 2022210295
(71) Applicant: Oriental Motor Co., Ltd., Tokyo 111-0056 (JP)
(72) Inventor: SOMEYA, Kazushi, Tsukuba-shi, Ibaraki 3002635 (JP)
(74) Representative: Huebner, Stefan Rolf
(86) International application number: PCT/JP2023/033335
(87) International publication number: WO 2024/142505

(57) **Abstract**

To improve the freedom of choice of a driver that can be assembled together with a driven device. A driver attachment 10 for coupling a driver 20 and a driven device 30, including: a coupling 1 including a hollow input shaft 1a1 and a solid output shaft 1b; and a bearing 3 that supports a thrust load and a radial load of the coupling, wherein a solid rotating shaft 21 of the driver is fixed to the hollow input shaft of the coupling, and the solid output shaft of the coupling is inserted into the hollow input shaft 31 of the driven device.

## Description

### TECHNICAL FIELD

The present invention relates to a driver attachment.

### BACKGROUND ART

In Patent Document 1, a coupling case for coupling an electric motor and a speed reducer via a coupling is described. An input flange has a first bearing in which a gear set engaging with a pinion to be inserted is located, and the input flange is located on the input side of the speed reducer. An input shaft with a pinion engaging with the gear set is fit to the first bearing of the input flange. The input shaft has the pinion protruding at one end and a coupling pinion fixing portion formed at the other end. The input shaft is supported by the second bearing of the coupling case. The coupling case has a fittable output side that is joined to the input flange, and a fittable input side that is joined to the electric motor on the opposite side. The coupling is configured to be formed with the pinion fixing portion of the input shaft, a freely movable intermediate portion engaging with the pinion fixing portion, and a shaft fixing portion that engages with the intermediate portion and is fit to a motor shaft, and to cause the motor shaft to be inserted through the intermediate portion to the pinion fixing portion.

### REFERENCE DOCUMENT LIST

### PATENT DOCUMENT

Patent Document 1: JP 2010-242958 A

### SUMMARY OF THE INVENTION

### PROBLEM TO BE SOLVED BY THE INVENTION

In conventional art, a load capacity depends on the bearing in a driver when the driver and a driven device are coupled to each other via a coupling. Thus, the freedom of choice of drivers is limited.

In view of such circumstances, an object of the present invention is to improve the freedom of choice of a driver that can be assembled together with a driven device.

### MEANS FOR SOLVING THE PROBLEM

A driver attachment for coupling a driver and a driven device according to the present invention includes a coupling including a hollow input shaft and a solid output shaft; and a bearing that supports a thrust load and a radial load of the coupling, wherein a solid rotating shaft of the driver is fixed to the hollow input shaft of the coupling, and the solid output shaft of the coupling is inserted into the hollow input shaft of the driven device.

### EFFECTS OF THE INVENTION

The present invention can improve the freedom of choice of a driver that can be assembled together with a driven device.

### BRIEF DESCRIPTION OF THE DRAWINGS

FIG. 1A is a plan view of a motor attachment.
FIG. 1B is a cross-sectional view taken along line A-A of FIG. 1A.
FIG. 2 is a perspective view of a coupling.
FIG. 3 is an exploded side view of an electric hand mechanism.
FIG. 4A is a plan view of the electric hand mechanism.
FIG. 4B is a cross-sectional view taken along line B-B of Figure 4A.
FIG. 5A is a plan view of a turntable actuator.
FIG. 5B is a cross-sectional view taken along line C-C of FIG. 5A.
FIG. 6A is a left side view of a linear actuator.
FIG. 6B is a front view of the linear actuator.
FIG. 6C is a cross-sectional view taken along line D-D of FIG. 6B.
FIG. 6D is a front view of a slider mechanism.
FIG. 6E is a cross-sectional view taken along line E-E of FIG. 6D.
FIG. 6F is a cross-sectional view taken along line F-F of FIG. 6D.
FIG. 7 is an explanatory drawing of a motor attachment including a helical gear.
FIG. 8A is an exploded side view of a coupling 501A.
FIG. 8B is a cross-sectional view taken along line 8B-8B of FIG. 8A.
FIG. 9A is a side view of the coupling 501A.
FIG. 9B is a cross-sectional view taken along line 9B-9B of FIG. 9A.
FIG. 10A is an explanatory drawing illustrating combinations of the electric hand mechanism.
FIG. 10B is an explanatory drawing illustrating combinations of the turntable actuator.
FIG. 10C is an explanatory drawing illustrating combinations of a ball-screw linear actuator.
FIG. 10D is an explanatory drawing illustrating combinations of the ball-screw linear actuator.
FIG. 10E is an explanatory drawing illustrating combinations of the ball-screw linear actuator.
FIG. 10F is an explanatory drawing illustrating combinations of a motor with a speed reducer.
FIG. 11 is a partially enlarged cross-sectional view of the coupling 1.

### MODE FOR CARRYING OUT THE INVENTION

An embodiment of the present invention will be described below. However, the present invention is not limited to the following embodiment.

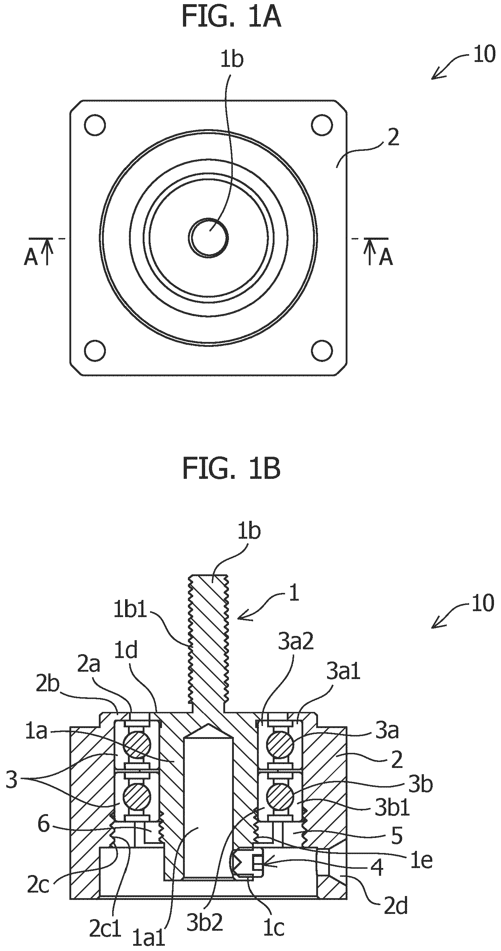

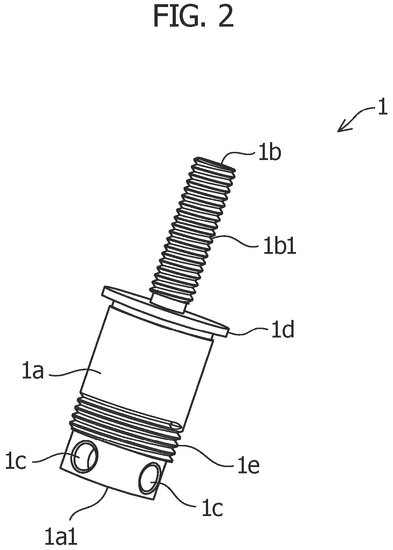

FIGS. 1A, 1B, and 2 illustrate a motor attachment 10 that includes a coupling 1 to couple a motor, which is an example of a driver, and a driven device. The coupling 1 includes a tubular portion 1a, an insertion portion 1a1 in which the solid rotating shaft of the motor is inserted, and an output shaft 1b to be inserted into the input portion of the driven device.

The motor attachment 10 includes the coupling 1 that is rotationally pivoted by a thrust-radial bearing 3 fixed in an almost cylindrical case 2.

The coupling 1 includes the tubular portion 1a with one closed end in the axial direction and the solid output shaft 1b that is provided at the closed portion of the tubular portion and extends in the same direction as the tubular portion. The hollow portion of the tubular portion 1a is the insertion portion 1a1 in which a rotating shaft 21 of a motor 20 is inserted. On the other end of the side of the tubular portion 1a in the axial direction, two tapped holes 1c for fixing the rotating shaft 21 of the motor 20 are provided, the rotating shaft 21 being inserted into the insertion portion 1a. The tapped holes 1c are spaced 90 degrees apart in the circumferential direction. In addition, it is sufficient to have at least one tapped hole 1c.

The output shaft 1b is worked so as to be directly assembled into the input portion of the driven device. For example, if the driven device is a hand mechanism part 30 as in the present embodiment, a screw 1b1 to be screwed into a nut 31 serving as the input portion of the hand mechanism part 30 is formed on the output shaft 1b.

At the boundary between the tubular portion 1a and the output shaft 1b, a collar portion 1d having a larger diameter than the outside diameter of the tubular portion 1a is formed. When the coupling 1 is assembled into the case 2, the collar portion 1d serves as a fixing portion inside the thrust-radial bearing 3, as will be described later.

Furthermore, an external screw 1e is formed on a part of the outer periphery of the tubular portion 1a. As will be described later, a bearing inner-ring cap screw for fixing the inner ring of the thrust-radial bearing 3 is screwed onto the external screw 1e.

The case 2 has an inner surface 2c on which the thrust-radial bearing 3 is assembled. In the present embodiment, the thrust-radial bearing 3 includes a bearing 3a on the output shaft side and a bearing 3b on the motor attachment side. The bearings are disposed in series in the axial direction.

A collar portion 2b protruding inward in the radial direction is formed on one end of the inner surface of the case 2 on the output shaft side. In addition, an internal screw 2c1 is worked on the motor attachment side of the inner surface 2c of the case 2. The thrust-radial bear link 3 is fit to the inner surface 2c of the case 2. An outer ring 3a1 of the bearing 3a on the output shaft side and an outer ring 3b1 of the bearing 3b on the motor attachment side are pressed and fixed by the collar portion 2b of the case 2 and a bearing outer-ring cap screw 5 to be screwed onto the internal screw 2c1.

The tubular portion 1a of the coupling 1 is fit to the inner ring of the thrust-radial bearing 3 from the output shaft side of the case 2, and the collar portion 1d of the coupling 1 is in contact with an inner ring 3a2 of the bearing 3a on the output shaft side. The output shaft 1b protrudes to the output shaft side from an output-shaft-side end face 2a of the case 2. The inner ring 3a2 of the bearing 3a on the output shaft side and an inner ring 3b2 of the bearing 3b on the motor attachment side are pressed and fixed by a bearing inner-ring cap screw 6, which is to be screwed onto the external screw 1e worked on the outer surface of the tubular portion 1a of the coupling 1, and the collar portion 1d of the coupling 1.

### Configuration example of thrust-radial bearing

The thrust-radial bearing can be configured by using angular bearings or the like as the bearings 3a and 3b. In addition, a deep groove ball bearing can also constitute the thrust-radial bearing by placing, for example, a washer between the bearings 3a and 3b in the axial direction.

For example, a washer is placed between the inner ring 3a2 of the bearing 3a on the output shaft side and the inner ring 3b2 of the bearing 3b on the motor attachment side, and the inner ring 3a2 of the bearing 3a on the output shaft side and the inner ring 3b2 of the bearing 3b on the motor attachment side are fixed by the bearing inner-ring cap screw 6.

The outer ring 3a1 of the bearing 3a on the output shaft side and the outer ring 3b1 of the bearing 3b on the motor attachment side are fastened by the bearing outer-ring cap screw 5 while making an adjustment to a proper pressure without causing backlash in the thrust direction.

After the adjustment, the bearing outer-ring cap screw 5 is fixed by bonding to secure the outer ring 3a1 of the bearing 3a on the output shaft side and the outer ring 3b1 of the bearing 3b on the motor attachment side. The fixing method may be any method other than bonding, for example, welding or screwing.

Alternatively, a washer is placed between the outer ring 3a1 of the bearing 3a on the output shaft side and the outer ring 3b1 of the bearing 3b on the motor attachment side, and the outer ring 3a1 of the bearing 3a on the output shaft side and the outer ring 3b1 of the bearing 3b on the motor attachment side are fixed by the bearing outer-ring cap screw 5.

The inner ring 3a2 of the bearing 3a on the output shaft side and the inner ring 3b2 of the bearing 3b on the motor attachment side are fastened by the bearing inner-ring cap screw 6 while making an adjustment to a proper pressure without causing backlash in the thrust direction.

After the adjustment, the bearing inner-ring cap screw 6 is fixed by bonding to secure the inner ring of the bearing 3a on the output shaft side and the inner ring of the bearing 3b on the motor attachment side. The fixing method may be any method other than bonding, for example, welding or screwing.

This configuration example makes it possible to constitute a thrust-radial bearing even by using an inexpensive deep groove ball bearing.

In the foregoing example, the outer ring of the bearing is fixed by the bearing outer-ring cap screw 5 to be screwed onto the internal screw 2c1 worked on the motor attachment portion side of the inner surface 2c of the case 2. Without being limited to this fixing structure, several screw holes may be formed in the output shaft direction outside the inner surface 2c of case 2 in the radial direction, and a bearing outer-ring cap ring may be fastened with bolts. Alternatively, the bearing outer-ring cap ring may be fastened to the case inner periphery 2c by bonding or the like. In this case, the internal screw 2c1 and screw holes or the like do not need to be worked in the case 2.

Furthermore, the thrust-radial bearing can be configured with a single bearing by using a cross roller bearing or a four-point contact bearing.

The tubular portion 1a of the coupling 1 has the tapped hole 1c, which fixes the motor rotating shaft 21, opposite to the output shaft side with respect to the external screw 1e. When the coupling 1 is assembled into the case 2 as described above, the part of the tapped hole 1c protrudes opposite to the output shaft side from the bearing inner-ring cap screw 6 screwed onto the external screw 1e. On the side of the case 2, a hole 2d for inserting a tool (e.g., a hexagonal wrench) is formed at the same position as the tapped hole 1c in the axial direction. In a case in which the two tapped holes 1c of the coupling 1 are spaced 90 degrees apart in the circumferential direction, the two holes 2d are provided on the case 2. In a case in which the coupling 1 has the single tapped hole 1c, the single hole 2d is provided on the case 2.

### First example (electric hand mechanism)

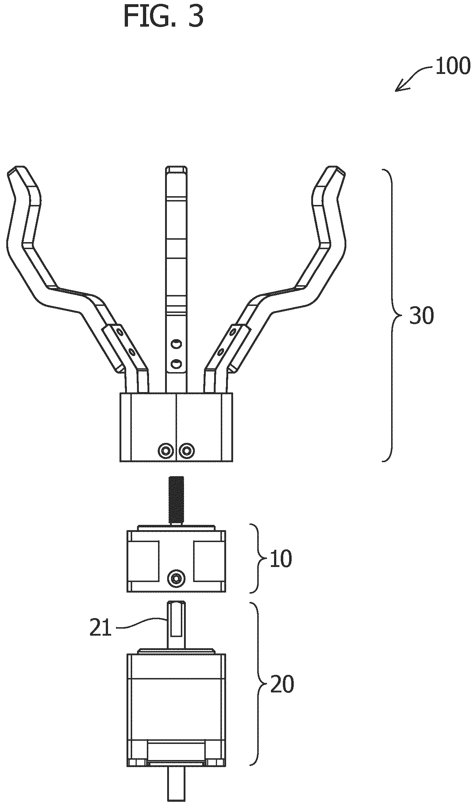

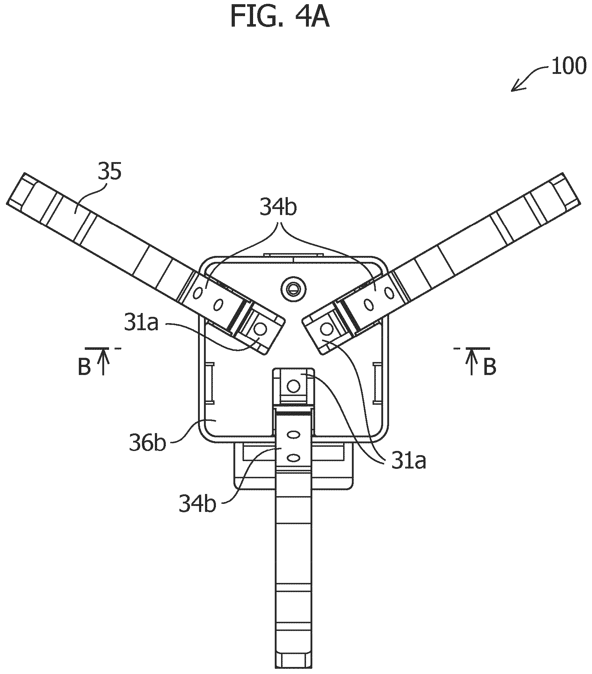

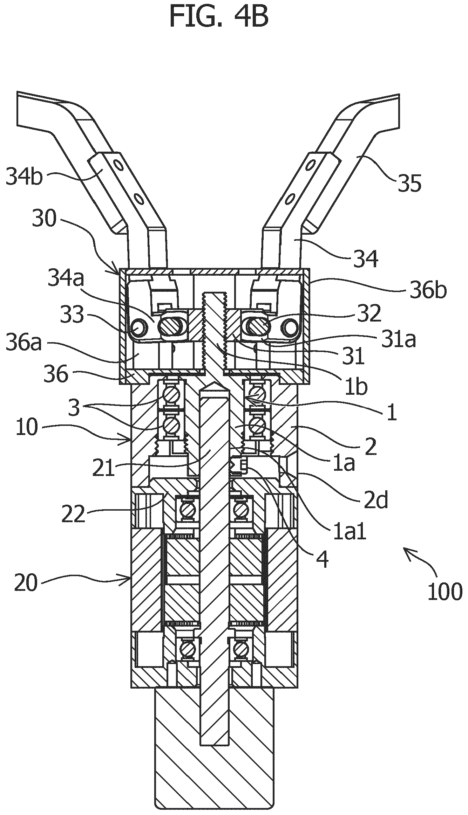

FIGS. 3, 4A, and 4B illustrate a first example of the configuration of an electric hand mechanism 100 in which the motor 20 and the hand mechanism part 30 are coupled using the motor attachment 10. The power of the motor 20 is transmitted to the hand mechanism part 30 through the motor attachment 10 and operates the hand mechanism part 30.

The assembly of the motor attachment 10 and the motor 20 will be described below. The motor rotating shaft 21 of the motor 20 is inserted into the motor-rotating-shaft insertion portion 1a1 of the tubular portion 1a of the coupling 1 in the motor attachment 10. With the coupling 1 and the motor rotating shaft 21 positioned with respect to the axis, the case 2 of the motor attachment 10 and the flange 22 of the motor 20 are fastened with bolts (not shown).

Thereafter, setscrews 4 are screwed into the tapped holes 1c on the tubular portion 1a of the coupling 1, so that the motor rotating shaft 21 is fixed into the motor-rotating-shaft insertion portion 1a1 of the tubular portion 1a of the coupling 1. As described above, a tool is inserted from the insertion hole 2d of the case 2 to secure the setscrew 4 to the tapped hole 1c of the coupling 1, so that the coupling 1 can be fixed to the motor rotating shaft 21.

Specifically, before assembly, the setscrews 4 are slightly screwed into the tapped holes 1c on the tubular portion 1a of the coupling 1, the tool is inserted from the insertion hole 2d of the case 2, and the tip of the tool is fixed to the screw head of the setscrew 4. In this state, the motor attachment 10 and the motor 20 are fastened as described above. Thereafter, the setscrews 4 on the tubular portion 1a of the coupling 1 are secured with the tool, so that the coupling 1 can be easily fastened to the motor rotating shaft 21 inserted in the motor-rotating-shaft insertion portion 1a1.

The motor rotating shaft 21 and the coupling 1 rotate integrally. The rotation of the coupling 1 is supported by the thrust-radial bearing 3.

Since the output shaft 1b of the coupling 1 serves as a driving shaft, a thrust load and a radial load are applied to the output shaft 1b upon assembly to the driven device. For example, when the driven device is the hand mechanism part 30 as described in the present example, the nut 31 serving as the input portion of the hand mechanism part 30 and the output shaft 1b are screwed to each other to displace the nut in the axial direction. The thrust-radial bearing 3 is structured to support the load received by the output shaft 1b due to the displacement of the nut. Moreover, the thrust-radial bearing 3 is located outside the coupling 1, which is fixed to the motor rotating shaft 21, in the radial direction, thereby suppressing vibrations of the motor rotating shaft 21.

The assembly of the motor attachment 10 and the hand mechanism part 30 will be described below. As described above, the screw 1b1 to be screwed into the nut 31 of the hand mechanism part 30 is worked on the output shaft 1b of the coupling 1.

For example, the hand mechanism part 30 may be a three-claw hand mechanism part. The three-claw hand mechanism part 30 includes a base part 36, fingers 34, and claws 35 in addition to the above-described nut 31. The base part 36 is nearly shaped like a plate and is attached to the mounting surface of the case 2 of the motor attachment 10 so as to face the mounting surface in the axial direction. A hole portion is formed on the base part 36, and the output shaft 1b passes through the hole portion. On a surface of the base part 36 on the opposite side from the surface facing the motor attachment 10, three finger support portions 36a extending in substantially the same direction as the protruding direction of the output shaft 1b are provided at equal intervals in the circumferential direction.

The nut 31 is almost cylindrical, and an internal screw receiving the external screw 1b1 of the output shaft 1b is formed on the inner surface of the nut 31. On the outer surface of the nut 31, three arm portions 31a protruding outward in the radial direction are provided at equal intervals in the circumferential direction. The positions of the three arm portions 31a correspond to the positions of the three finger support portions 36a in the circumferential direction. The three arm portions 31a are located inside the corresponding finger support portions 36a in the radial direction.

The three fingers 34 have the same dimensions in almost L-shaped external forms and each include a proximal end portion 34a, a bent portion, and a distal end portion 34b. The finger extends outward almost in the radial direction from the proximal end portion to the bent portion and extends in substantially the same direction as the protruding direction of the output shaft 1b from the bent portion to the distal end portion 34b.

The three proximal end portions 34a have drilled long hole portions in substantially the circumferential direction, the long hole portion extending in the radial direction. The three arm portions 31a have drilled hole portions in substantially the circumferential direction, the hole portion being located at almost the same position as the long hole portion in the radial direction. Moreover, a link pin 32 is provided to pass through the hole portion of the arm portion 31a of the nut 31 and the long hole portion of the proximal end portion 34a of the finger 34. The proximal end portion 34a is joined to the arm portion 31a so as to be swingable around the link pin 32.

On the bent portions of the three fingers 34, drilled hole portions are provided in substantially the circumferential direction. The three finger support portions 36a have drilled hole portions in substantially the circumferential direction, the hole portion being located at the same position as the hole portion of the bent portion of the finger 34 in the radial direction. A finger opening/closing pin 33 is provided to pass through the hole portion of the finger support portion 36a and the hole portion of the bent portion of the finger 34 corresponding to the finger support portion. The bent portion of the finger 34 is joined to the finger support portion 36a, which is a stationary body, so as to be swingable around the finger opening/closing pin 33.

The claw 35 extending in almost the same direction as the protruding direction of the output shaft 1b is attached to each of the distal end portions 34b of the three fingers 34.

A cover portion 36b is attached to the base part 36 such that the cover portion 36b covers the nut 31, the finger support portions 36a, and the proximal end portions 34a and the bent portions of the fingers 34. The cover portion 36b is almost cylindrical with one closed end in the axial direction.

On the closed portion, an opening portion is formed to allow the passage of a portion preceding the bent portion of the finger 34.

The motor attachment 10 mounted on the motor 20 is assembled to the three-claw hand mechanism part 30. On the inner surface of the nut 31 of the three-claw hand mechanism part 30, an internal screw to receive the external screw 1b1 of the output shaft 1b is formed. In a state in which the internal screw on the inner surface of the nut 31 and the external screw 1b1 of the output shaft 1b are screwed to each other, the case 2 of the motor attachment 10 and the base part 36 of the hand mechanism part 30 are fastened with bolts (not shown).

As described above, the electric hand mechanism 100 can be configured by assembling the motor 20 and the hand mechanism part 30 via the motor attachment 10.

The operations of the three-claw electric hand mechanism 100 will be described below.

The three fingers 34 are joined to the three finger support portions 36a, which are spaced at equal intervals in the circumferential direction, via the finger opening/closing pins 33. Furthermore, the three fingers 34 and the three arm portions 31a of the nut 31 are joined via the link pins 32. In this way, the rotation of the nut 31 is regulated.

When the motor rotating shaft 21 is rotated by driving the motor 20, the rotation leads to the coupling 1 and the output shaft 1b that are supported by the thrust-radial bearing 3 of the motor attachment 10. When the output shaft 1b rotates circumferentially in one direction, the nut 31 is displaced axially in one direction. When the output shaft 1b rotates circumferentially in the other direction, the nut 31 is displaced axially in the other direction.

When the nut 31 reciprocates in the axial direction, the distal end portions 34b of the three fingers 34 coupled to the arm portions 31a via the link pins 32 reciprocate substantially in the radial direction with the finger open/close pins 33 serving as the pivot. The three fingers simultaneously move outward and inward in the radial direction. The reciprocation of the three fingers 34 opens and closes the three claws 35. In this way, an opening and closing motion of the three-claw electric hand mechanism 100 can be achieved by driving the single motor 20.

Thrust generated by the axial reciprocation of the nut 31 is output as the gripping force of the claws 35. Thus, a thrust load (axial load) is applied to the output shaft 1b that drives the nut 31.

In order to obtain a greater gripping force, the thrust of the nut 31 must be supported by the output shaft 1b. The coupling 1 having the output shaft 1b is pivotally supported by the thrust-radial bearing 3 in the motor attachment 10, achieving a structure supporting the above-described thrust load.

In addition, the screw 1b1 of the output shaft 1b must rotate precisely in order to smoothly move the nut 31, and the thrust-radial bearing 3 acts to rotate the screw.

Furthermore, by using the bearing 3 that supports the thrust load, the maximum load of the bearing in the motor 20 may be relatively light, the life of the overall electric hand mechanism 100 is extended, and the capacity to handle an excessive load or an impact load is also improved. Moreover, backlash and deformation due to a thrust load in the thrust direction can be suppressed, allowing accurate positioning of the hand.

### Other examples

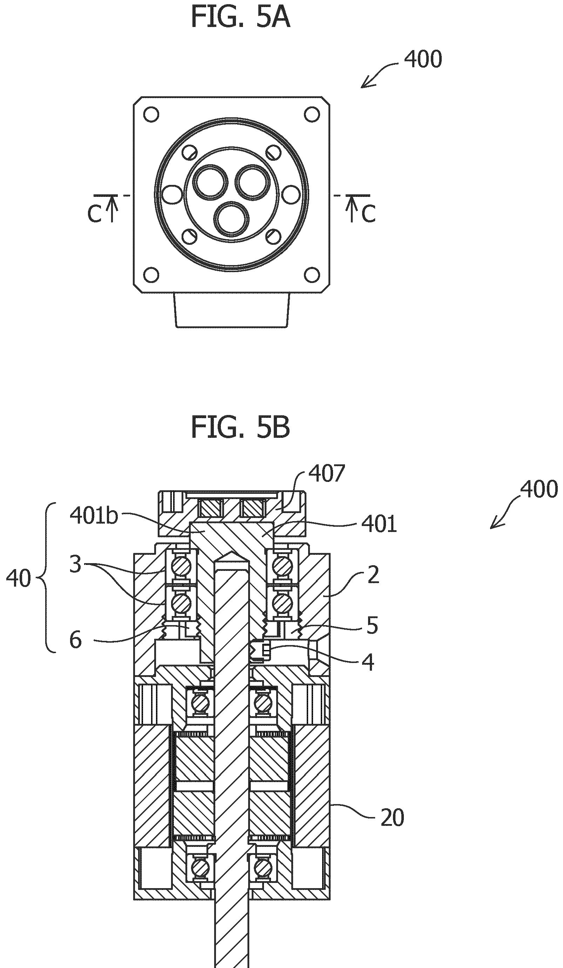

FIGS. 5A and 5B illustrate a turntable actuator 400.

A turntable 407 serving as a driven device is attached to an output shaft 401b of a coupling 401 for a motor attachment 40. Components other than the coupling 401 for the motor attachment 40 are similar to the components of the above-described motor attachment 10.

The turntable actuator 400 that supports a load in the thrust direction can be configured by attaching the motor attachment 40 to the motor 20.

The turntable 407 rotates when the output shaft 401b of the motor attachment 40 is rotated by the rotation of the motor 20. This can rotate a workpiece or the like placed on the turntable 407.

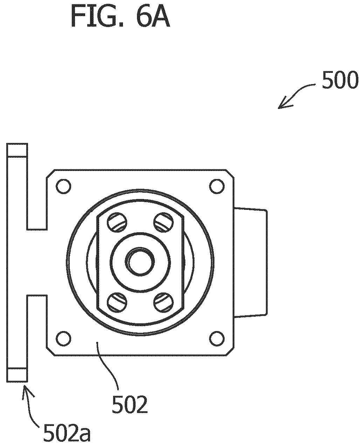

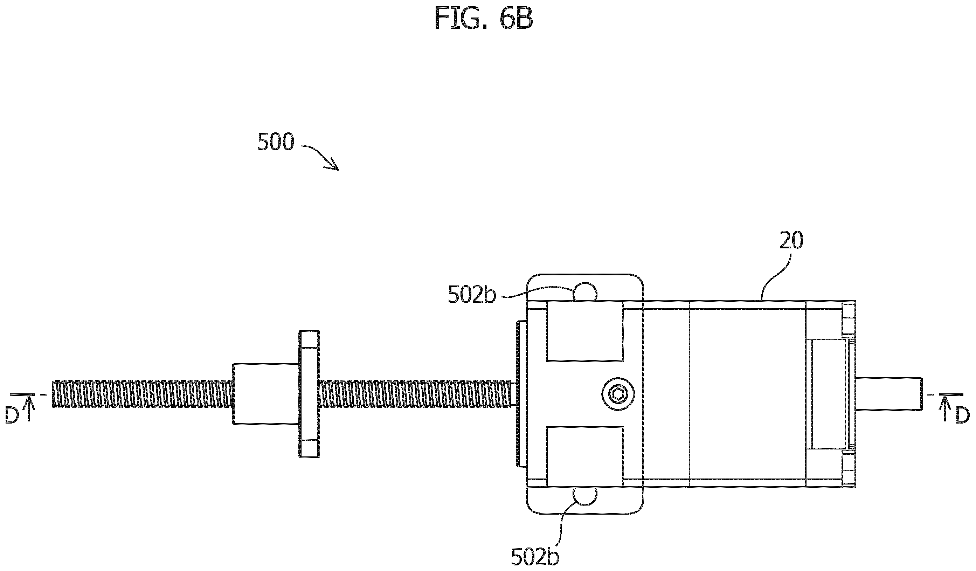

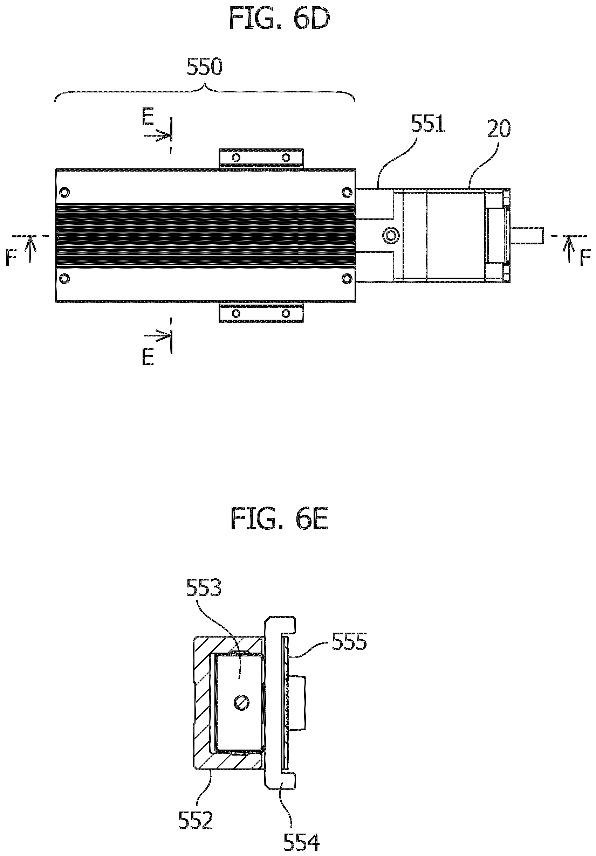

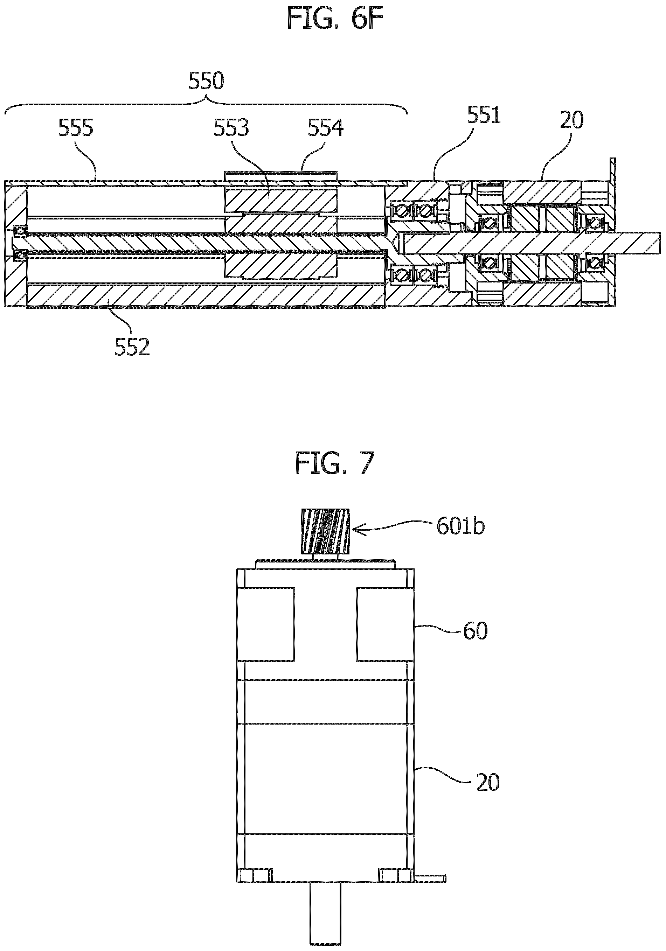

FIGS. 6A to 6C illustrate a linear actuator 500.

An output shaft 501b of a coupling 501 for a motor attachment 50 acts as the screw shaft of a ball screw.

A ball screw nut 501c can be screwed onto the output shaft 501b. Furthermore, a case 502 has a mounting leg 502a for mounting onto another device (not shown) and has a structure to be attached to the device with screws through mounting holes 502b of the mounting leg 502a. Other components are similar to the components of the above-described motor attachment 10.

The ball-screw linear actuator 500 can be configured by attaching the motor attachment 50 to the motor 20 and assembling a linear-motion mechanism part (slider or cylinder) that linearly moves the ball screw nut 501c.

The rotation of the motor 20 rotates the screw shaft of the ball screw, that is, the output shaft 501b of the motor attachment 50, thereby linearly moving the ball screw nut 501c of the linear-motion mechanism part in the axial direction.

FIGS. 6D to 6F illustrate a slider mechanism.

A slider mechanism part 550 and the motor 20 can be assembled via a motor attachment 551.

A guide block-ball screw nut 553 moving along a frame-guide rail 552 is provided. The guide block-ball screw nut 553 also acts as a nut to be assembled to the output shaft 501b, so that the guide block-ball screw nut 553 moves in response to a shaft rotation. A table 554 is assembled to the guide block-ball screw nut 553. The table 554 can be applied to uses such as conveyance of works.

In addition, as a measure for safety, a cover 555 is attached as the safety cover of a table moving part.

FIGS. 6A to 6C show the motor attachment 50 using the case 502 with the mounting leg 502a. The case 2 to be adopted may be identical to that of the motor attachment 10.

Furthermore, the method for mounting the device can be changed within the range of design changes. For example, the shape of the leg can be changed or the leg can be removed.

This can reduce necessary coupling between the motor and the thrust bearing and a holder and shorten lengthwise dimensions. Moreover, the lengthwise dimensions can be further shortened by inserting the motor rotating shaft into the coupling.

The motor attachments 50 and 551 used thus can also be applied to an actuator or a device that requires a load in the thrust direction.

The foregoing example described the linear motion mechanism of the ball screw. A linear motion mechanism for a lead screw may be provided.

FIG. 7 illustrates the motor 20 with a mounted motor attachment 60.

An output shaft 601b of a coupling in the motor attachment 60 has a helical pinion. Components other than a coupling 601 are similar to the components of the above-described motor attachment 10.

The motor with the output shaft 601b having the helical pinion can be configured by attaching the motor attachment 60 to the motor 20. By combining a gear reduction mechanism (not shown in FIG. 7) that meshes with the output shaft 601b of the helical pinion, a motor with a speed reducer can be configured.

A load is applied to the output shaft 601b of the helical pinion in the thrust direction. By using the motor attachment 60 with the coupling pivotally supported by the thrust-radial bearing 3, the allowable torque of the gear reduction mechanism can be increased.

Furthermore, the helical pinion of the output shaft 601b may be replaced with a hypoid pinion or a worm of a worm gear to configure a motor with a speed reducer to which a gear reduction mechanism that meshes with the pinion or the worm is assembled.

However, in some cases, pinions such as a helical pinion cannot be worked directly on the output shaft 601b by a gear cutter or the like. In this case, the output shaft 601b may be formed by working the output shaft of the coupling into a round shaft and fixing the helical pinion to the round shaft by press fitting, bonding, or the like.

In addition, in the couplings 1, 401, and 501 as well as the coupling 601, instead of directly working the output shaft, the output shaft may be rounded and then the screw shaft and the turntable coupling shaft may be fixed by press fitting, bonding, or the like.

As described above, the application to an attachment for a device that requires various loads in the thrust direction can be achieved.

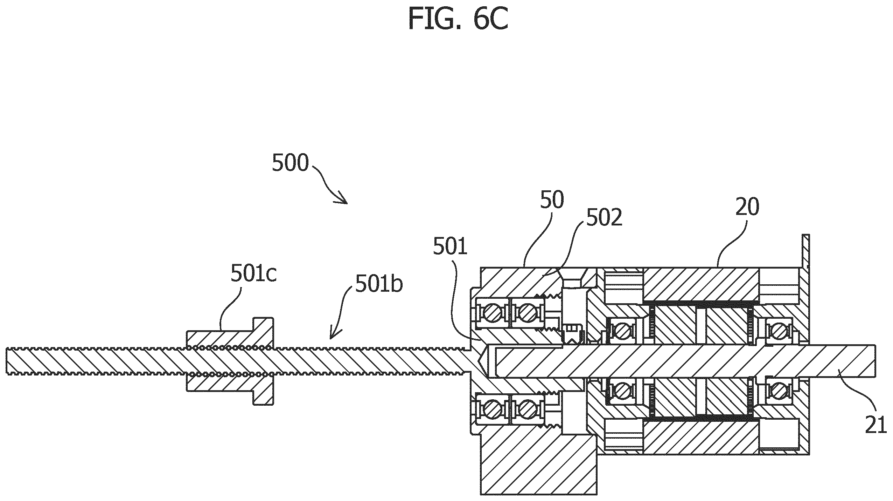

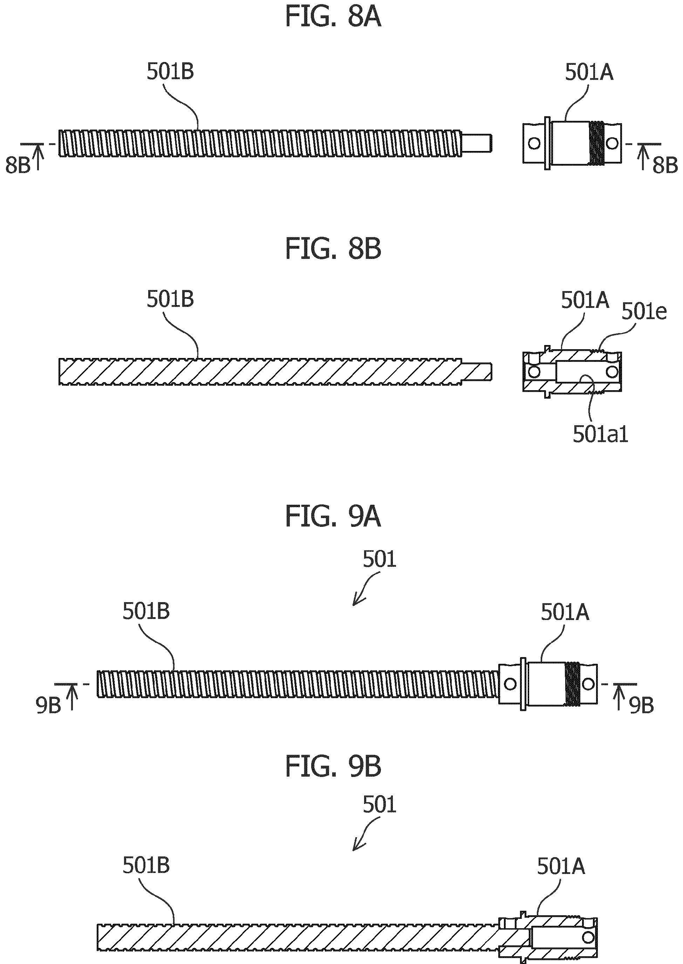

When the coupling 501 in FIG. 6C is formed, a tubular component 501A and an output shaft component 501B may be formed separately, as illustrated in FIGS. 8A and 8B, and then the components may be combined together as illustrated in FIGS. 9A and 9B. The components can be integrated by, for example, fastening with setscrews, press-fitting, bonding, welding, a combination of press-fitting, bonding, and fastening with setscrews, or friction welding. The method is not limited thereto.

It may be difficult to form the coupling 501 with accuracy by integrating the tubular component 501A, in which an insertion portion 501a1 and an external screw 501e are already formed, with the output shaft component 501B, because the output shaft component 501B is longer than the tubular component 501A.

Thus, a component not provided with the insertion portion 501a1 or the external screw 501e is first prepared as an original component of the tubular component 501A. After the component is integrated with the output shaft component 501B, working (finishing) for forming the insertion portion 501a1 and the external screw 501e with respect to the output shaft component 501B may be performed to form the coupling 501. Thus, the accuracy of the coupling 501 can be obtained with relative ease.

Alternatively, a component provided with the insertion portion 501a1 without the external screw 501e is prepared as an original component of the tubular component 501A. After the component is integrated with the output shaft component 501B, working (finishing) for forming the external screw 501e with respect to the output shaft component 501B may be performed to form the coupling 501. This can also obtain the accuracy of the coupling 501 with relative ease.

In addition, the same motor 20 can be used for all of the electric hand mechanism 100, the turntable actuator 400, the ball-screw linear actuator 500, and the motor with the speed reducer.

Motor attachments are prepared for the typical motor 20 with the motor rotating shaft 21 formed into an ordinary round shaft (including a rotating shaft with one or two faces cut by milling for attachment), allowing assembly of various driven devices.

Furthermore, regarding the motor attachments, only the couplings are formed according to the driven device, but other components can be configured likewise.

Other motors can be attached if the mounting angle dimensions with the motor attachment and the shapes of the motor rotating shafts are identical to those of the motor 20.

For example, a high-power motor or a low-power motor can be adopted according to the output of the driven device. Furthermore, various motors such as a stepping motor, a servo motor, and a brushless DC motor can be adopted according to the operation and function of the driven device.

Combinations of mechanism products can be constructed by preparing various types of motor attachments, motors, and driven devices.

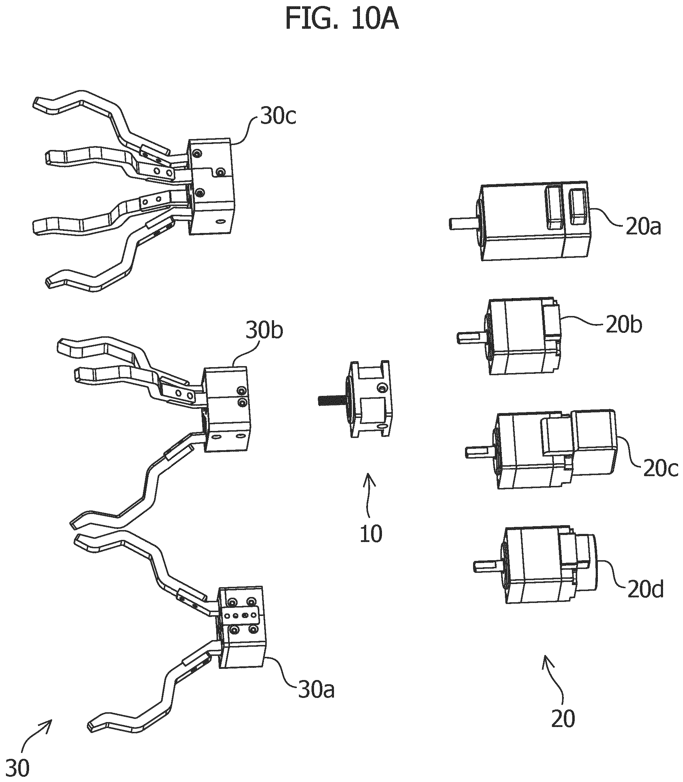

FIGS. 10A to 10F illustrate examples of combinations of mechanism products.

FIG. 10A illustrates combinations of the electric hand mechanism 100. Motors 20a, 20b, 20c, and 20d can be combined with a two-claw hand mechanism part 30a, a three-claw hand mechanism part 30b, and a four-claw hand mechanism part 30c by using the motor attachment 10. As described above, various motors such as a stepping motor, a servo motor, a brushless DC motor and motors with additional functions such as an electromagnetic brake can be combined according to the application purpose.

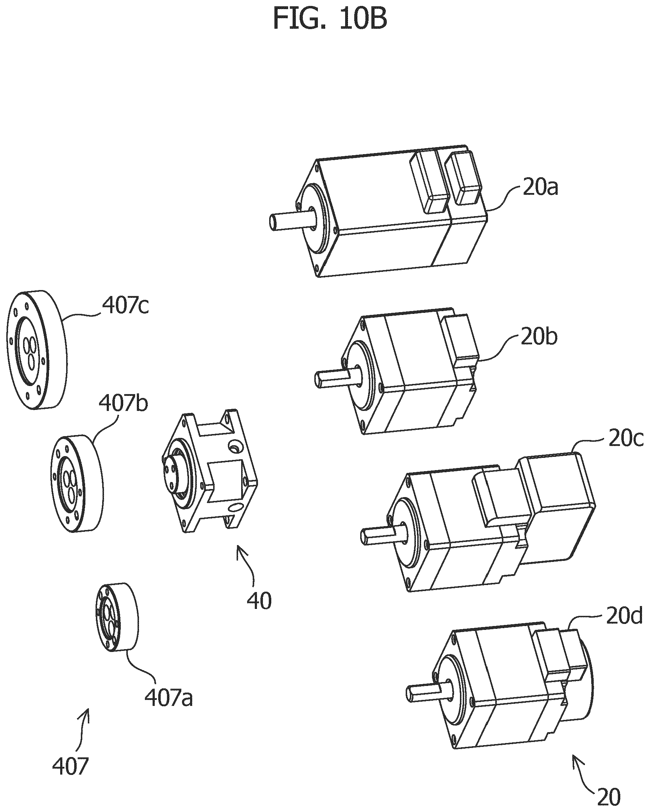

FIG. 10B illustrates combinations of the turntable actuator 400. The motors 20a, 20b, 20c, and 20d can be combined with turntables 407a, 407b, and 407c having different diameters by using the motor attachment 40.

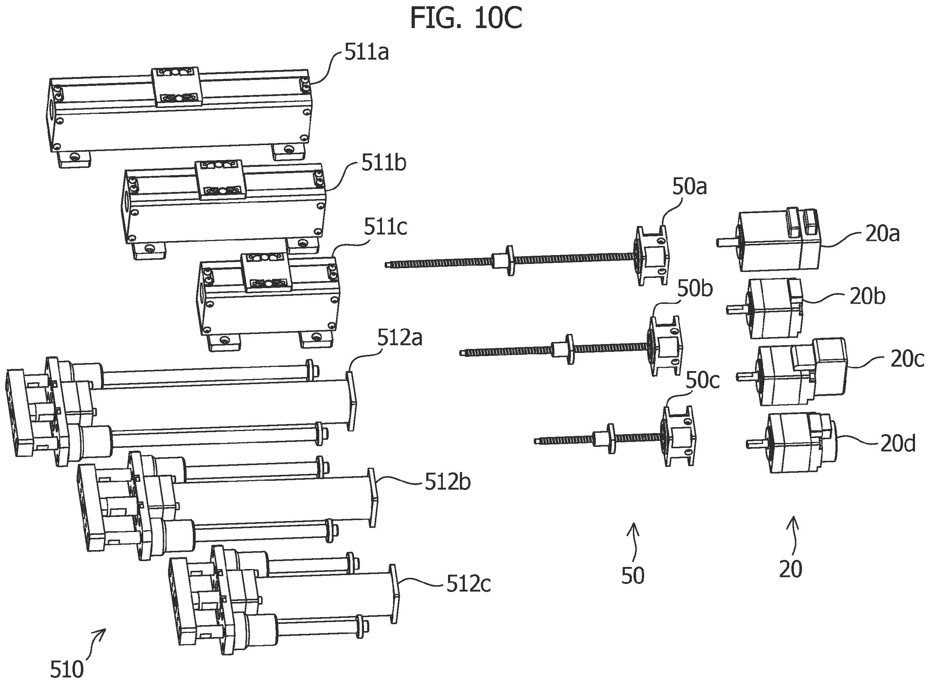

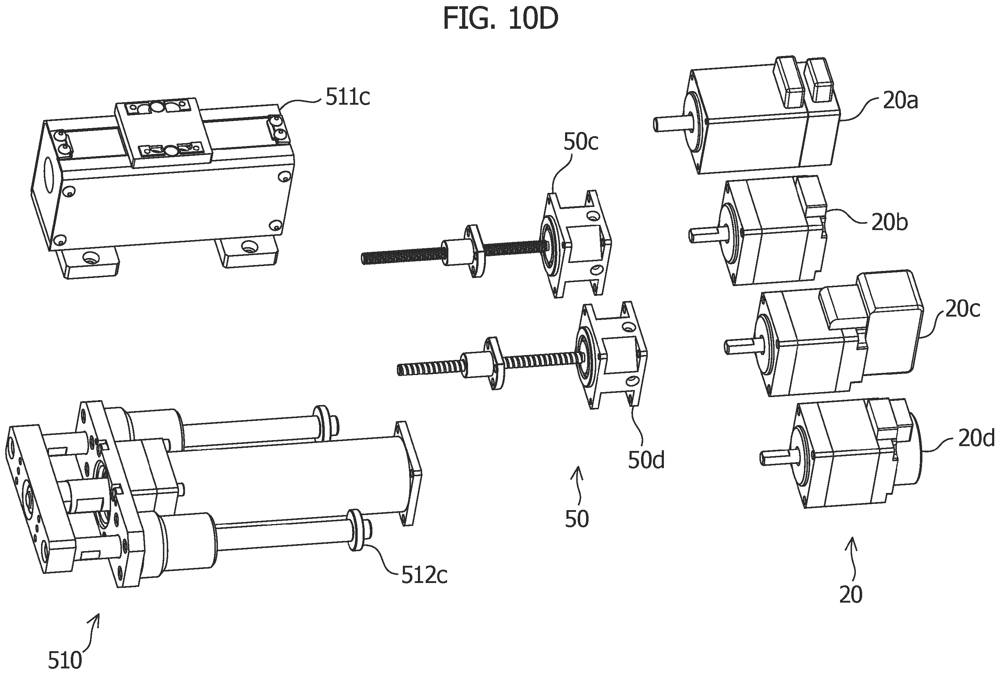

FIGS. 10C and 10D each illustrate combinations of the ball-screw linear actuator 500.

As illustrated in FIG. 10C, the motors 20a, 20b, 20c, and 20d can be combined with slider mechanism parts 511a to 511c or cylinder mechanism parts 512a to 512c of a linear-motion mechanism part 510 by using the motor attachment 50. Furthermore, by preparing motor attachments 50a, 50b, and 50c that vary in the screw shaft length (stroke) of the ball screw serving as the output shaft 501b of the motor attachment 50, a slider or cylinder can be configured as the ball-screw linear actuator 500 with different strokes. For example, the slider mechanism part 511a and the cylinder mechanism part 512a can be combined with the motor attachment 50a. The slider mechanism part 511b and the cylinder mechanism part 512b can be combined with the motor attachment 50b, and the slider mechanism part 511c and the cylinder mechanism part 512c can be combined with the motor attachment 50c.

FIG. 10D illustrates an example in which the motors 20a, 20b, 20c, and 20d in FIG. 10C are combined with the slider mechanism part 511c and the cylinder mechanism part 512c of the linear-motion mechanism part 510 by using the motor attachment 50c. Furthermore, FIG. 10D illustrates an example of combination with a motor attachment 50d having the output shaft with the same screw shaft length (stroke) of the ball screw serving as the output shaft 501b of the motor attachment 50c and a different ball-screw lead pitch.

In other words, the motors 20a, 20b, 20c, and 20d are combined with the motor attachment 50c or the motor attachment 50d, and the slider mechanism part 511c or the cylinder mechanism part 512c is further combined, thereby constituting a slider or cylinder with a different lead pitch.

The motor attachments 50a and 50b may have the same screw shaft length (stroke) of the ball screw, and a motor attachment having the output shaft with a different ball-screw lead pitch can also be used, although this configuration is not illustrated.

As shown in FIGS. 10C and 10D, the combinations of the ball screw linear actuator 500 with sliders and cylinders with different strokes and lead pitches can be implemented in combination with various motors.

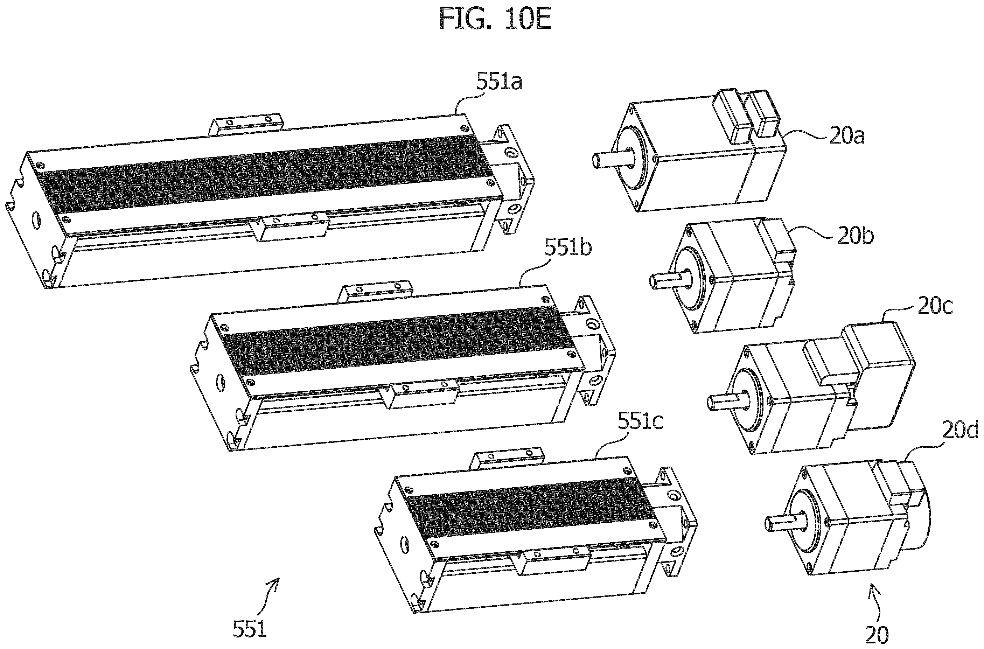

FIG. 10E illustrates combinations in which the motors 20a, 20b, 20c, and 20d can be combined with slider attachments 551a, 551b, and 551c having different strokes in the example of assembly of a linear-motion mechanism part 500 with a slider attachment 551.

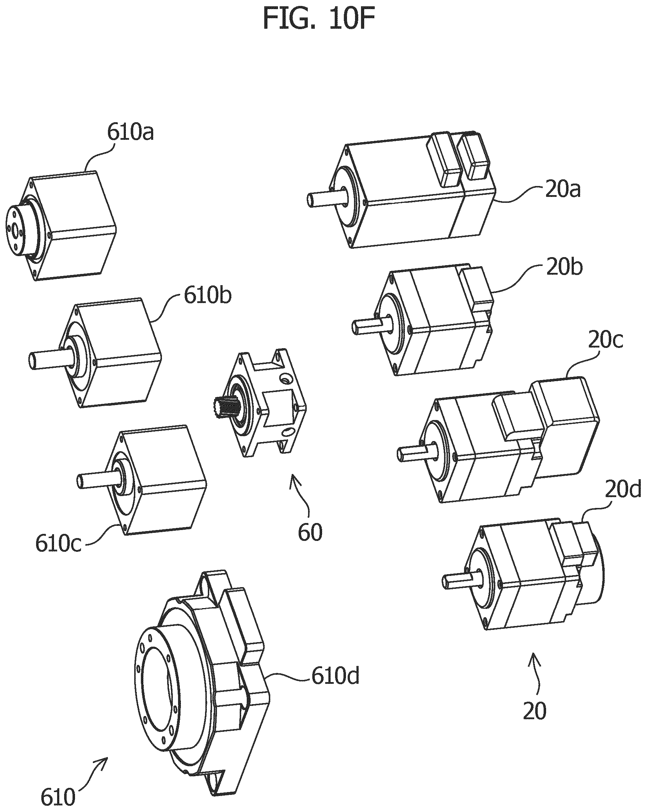

FIG. 10F illustrates combinations of motors with speed reducers. The motors 20a, 20b, 20c, 20d can be combined with various types of gear reduction mechanism parts 610a, 610b, 610c, 610d by using the motor attachment 60.

As described above, the combinations of the electric hand mechanism 100, the combinations of the turntable actuator 400, the combinations of the ball-screw linear actuator 500, and the combinations of the motor with the speed reducer are described. Each of these combinations can be combined with the same motors 20a, 20b, 20c, and 20d. In other words, by using the motor attachments 10, 40, 50, and 60, the combinations can be configured such that the motors 20a, 20b, 20c, 20d can be combined with the mechanism parts 30, 407, 510, 551, and 610.

The foregoing embodiment can yield the following effects:
1) The solid rotating shaft of the motor can be changed to an output shaft according to the driven device by assembling the attachment according to the embodiment to an ordinary motor. Furthermore, even if at least one of the motor and the driven device is not necessarily strong against a thrust load, the bearing in the attachment can support a load in the thrust direction, the load being generated by driving the driven device. This can improve the freedom of choice of a driver that can be assembled to the driven device.
2) By using the above-described attachment, the shaft can be changed with suppressed lengthwise dimensions, that is, dimensions in the axial direction.
3) In the overall driving mechanism including the driver such as a motor, the attachment, and driven device, the lengthwise dimensions, that is, dimensions in the axial direction, can be minimized.

When the coupling 1 is fastened to the motor rotating shaft with setscrews, the distal end portion of the setscrew may come into contact with the motor rotating shaft, the contact portion may be recessed on the outer surface of the motor rotating shaft, and a portion around the contact portion may be slightly protruded into a convex portion. When such irregularities occur on the outer surface of the motor rotating shaft, the motor rotating shaft is less likely to be removed from the coupling 1, leading to difficulty in motor replacement.

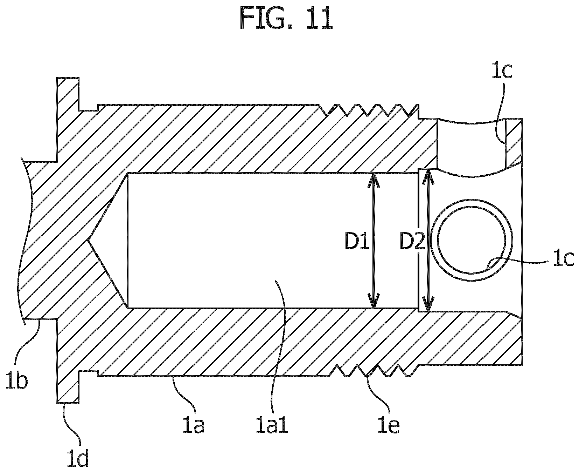

Thus, in the tubular portion 1a illustrated in FIG. 11, an inside diameter D2 of a portion in which the tapped hole 1c is formed may be slightly larger than an inside diameter D1 of a portion closer to the output shaft 1b than the portion in which the tapped hole 1c is formed. Thus, the rotating shaft of the motor to be replaced is easily removed from the coupling 1 when the motor is replaced with another.

Regarding the embodiment described above, the following supplements are disclosed.

### Supplement 1

A driver attachment for coupling a driver and a driven device, including:
a coupling including a hollow input shaft and a solid output shaft; and
a bearing that supports a thrust load and a radial load of the coupling, wherein
a solid rotating shaft of the driver is fixed to the hollow input shaft of the coupling, and
the solid output shaft of the coupling is inserted into the hollow input shaft of the driven device.

### Supplement 2

The driver attachment according to Supplement 1, wherein the bearing includes a plurality of bearings arranged adjacent to each other in the axial direction.

### Supplement 3

The driver attachment according to Supplement 1 or 2, wherein the driven device is a robot hand, and
the solid output shaft of the coupling is a screw shaft to be screwed into a nut that is the input portion of the robot hand.

### Supplement 4

The driver attachment according to Supplement 1 or 2, wherein the driven device is a turntable, and the solid output shaft of the coupling is a shaft to be coupled to the turntable.

### Supplement 5

The driver attachment according to Supplement 1 or 2, wherein the driven device is a linear motion mechanism, and
the solid output shaft of the coupling is the screw shaft of a ball screw or a lead screw of the linear motion mechanism.

### Supplement 6

The driver attachment according to Supplement 1 or 2, wherein the driven device is a gear reducer, and
the solid output shaft of the coupling is a pinion that meshes with the gear of the input portion of the gear reducer.

### Supplement 7

A driving mechanism combination including:
the driver attachment according to Supplement 1 or 2;
the driver; and
the driven device, wherein
the driver attachment is selected from a first group consisting of a plurality of driver attachments,
the driver is selected from a second group consisting of a plurality of drivers, and
the driven device is selected from a third group consisting of a plurality of driven devices.

### Supplement 8

The driver attachment according to Supplement 5, wherein the coupling is formed by integrating, before the hollow input shaft of the coupling is worked, a first component and a second component having the solid output shaft of the coupling, and then working the hollow input shaft for the first component with respect to the solid output shaft.

The embodiment of the present invention is described above. The present invention is not limited to the aforementioned embodiment and can be modified and changed in various ways based on the technical concept of the present invention.

### REFERENCE SYMBOL LIST

- 1: Coupling

- 1a: Tubular portion
- 1a1: Motor-rotating-shaft insertion portion
- 1b: Output shaft
- 1b1: Screw
- 1c: Tapped hole
- 1d: Collar portion
- 1e: External screw
- 2: Case
- 2a: End face
- 2b: Collar portion
- 2c: Inner surface
- 2c1: Internal screw
- 2d: Tool hole
- 3: Thrust-radial bearing
- 3a: Bearing
- 3b: Bearing
- 4: Setscrew
- 5: Bearing outer-ring cap screw
- 6: Bearing inner-ring cap screw
- 10: Motor attachment
- 20: Motor
- 21: Motor rotating shaft
- 22: Flange
- 30: Hand mechanism part
- 31: Nut
- 31a: Arm portion
- 32: Link pin
- 33: Finger opening/closing pin
- 34: Finger
- 34a: Proximal end portion
- 34b: Distal end portion
- 35: Claw
- 36: Base part
- 36a: Finger support portion
- 36b: Cover portion
- 100: Electric hand mechanism
- 400: Turntable actuator
- 500: Linear actuator
- 550: Slider mechanism part

## Claims

1. A driver attachment for coupling a driver and a driven device, comprising:
a coupling including a hollow input shaft and a solid output shaft; and
a bearing that supports a thrust load and a radial load of the coupling,
wherein:
a solid rotating shaft of the driver is fixed to the hollow input shaft of the coupling, and
the solid output shaft of the coupling is inserted into the hollow input shaft of the driven device.

2. The driver attachment according to claim 1, wherein the bearing includes a plurality of bearings arranged adjacent to each other in an axial direction.

3. The driver attachment according to claim 1 or 2, wherein the driven device is a robot hand, and
the solid output shaft of the coupling is a screw shaft to be screwed into a nut that is an input portion of the robot hand.

4. The driver attachment according to claim 1 or 2, wherein the driven device is a turntable, and
the solid output shaft of the coupling is a shaft to be coupled to the turntable.

5. The driver attachment according to claim 1 or 2, wherein the driven device is a linear motion mechanism, and
the solid output shaft of the coupling is a screw shaft of a ball screw or a lead screw of the linear motion mechanism.

6. The driver attachment according to claim 1 or 2, wherein the driven device is a gear reducer, and
the solid output shaft of the coupling is a pinion that meshes with a gear of an input portion of the gear reducer.

7. A driving mechanism combination comprising:
the driver attachment according to claim 1 or 2;
the driver; and
the driven device, wherein
the driver attachment is selected from a first group consisting of a plurality of driver attachments,
the driver is selected from a second group consisting of a plurality of drivers, and
the driven device is selected from a third group consisting of a plurality of driven devices.

8. The driver attachment according to claim 5, wherein the coupling is formed by integrating a first component before the hollow input shaft of the coupling is worked with a second component having the solid output shaft of the coupling, and then working the hollow input shaft for the first component with respect to the solid output shaft.
